# EUROPEAN PATENT APPLICATION

(11) **EP 4 357 468 A1**
(43) Date of publication of application: **24.04.2024**
(21) Application number: 22833316.7
(22) Date of filing: 30.06.2022
(51) Int. Cl.: C21D 8/12, C22C 38/00, C22C 38/60, H01F 1/147

(54) **GRAIN-ORIENTED ELECTROMAGNETIC STEEL SHEET MANUFACTURING METHOD AND ROLLING EQUIPMENT FOR MANUFACTURING GRAIN-ORIENTED ELECTROMAGNETIC STEEL SHEET**

(30) Priority: 30.06.2021 JP 2021109709
(71) Applicant: JFE Steel Corporation, Tokyo 100-0011 (JP)
(72) Inventor: SHIMOYAMA, Yusuke, Tokyo 100-0011 (JP); SHINGAKI, Yukihiro, Tokyo 100-0011 (JP); YAMAGUCHI, Hiroi, Tokyo 100-0011 (JP)
(74) Representative: Hoffmann Eitle
(86) International application number: PCT/JP2022/026423
(87) International publication number: WO 2023/277170

(57) **Abstract**

To provide a method of producing a grain-oriented electrical steel sheet that can stably produce a grain-oriented electrical steel sheet with low iron loss and little variation in iron loss using a tandem mill. Disclosed is a method of producing a grain-oriented electrical steel sheet, including: hot rolling; a single cycle of cold rolling, or multiple cycles of cold rolling with intermediate annealing in between; decarburization annealing; and secondary recrystallization annealing, in which annealing preceding final cold rolling is performed with an average cooling rate of 20 °C/s or higher in a temperature range from 800 °C to 350 °C, and the final cold rolling is performed using a tandem mill, where the steel sheet is heated to a temperature range from 70 °C to 200 °C and then cooled to 60 °C or lower within 10 seconds before being introduced into the first pass of the tandem mill.

## Description

### TECHNICAL FIELD

This disclosure relates to a method of producing a grain-oriented electrical steel sheet and a rolling mill for producing a grain-oriented electrical steel sheet used in the method.

### BACKGROUND

Grain-oriented electrical steel sheets are soft magnetic materials used as iron core materials in transformers and generators, and have excellent magnetic properties with a crystal structure in which the {110}<001> orientation (i.e., Goss orientation), which is an easy magnetization axis of iron, is highly aligned in the rolling direction of the steel sheet.

As a method to increase Goss-oriented grains, for example, JPS 50-016610 A (PTL 1) describes a method of heat-treating a cold-rolled sheet during cold rolling at low temperatures and applying aging treatment. In addition, JPH 08-253816 A (PTL 2) describes a technique in which the cooling rate during intermediate annealing before hot-rolled sheet annealing or final cold rolling is set at 30 °C/s or higher, and during the final cold rolling, inter-pass aging is performed at least twice with a sheet temperature of 150 °C to 300 °C for 2 minutes or more. In addition, JPH 01-215925 A (PTL 3) describes a technique that utilizes dynamic strain aging, in which dislocations introduced during rolling are immediately immobilized with C and N by performing warm rolling at a raised steel sheet temperature during rolling.

All of these techniques described in PTLs 1-3 attempt to improve the rolled texture by holding the steel sheet temperature at appropriate temperatures before cold rolling, during rolling, or between rolling passes, thereby diffusing the solute elements such as carbon (C) and nitrogen (N) at low temperatures, immobilizing dislocations introduced during cold rolling, preventing them from moving during the subsequent rolling processes, and causing more shear deformation. The application of these techniques results in the formation of a large number of Goss-oriented seed crystals in the primary-recrystallized sheets. The grain growth of those Goss-oriented seed crystals during secondary recrystallization allows them to be highly aligned in the Goss orientation after secondary recrystallization.

In addition, JPH 09-157745 A (PTL 4) describes a technology to further enhance the effect of the above strain aging, in which fine carbides are caused to precipitate in the steel in the annealing process immediately before final cold rolling in the cold rolling process, and the final rolling is divided into two parts, the first half and the second half; in the first half, rolling is performed at a low temperature of 140 °C or lower with a rolling reduction of 30 % to 75 %, and in the second half, rolling is performed at a high temperature of 150 °C to 300 °C in at least two rolling passes, with a total rolling reduction of 80 % to 95 % for the first and second halves combined. In addition, JPH 04-120216 A (PTL 5) describes a technology to cause fine carbides to precipitate in the steel by performing heat treatment at 50 °C to 150 °C for 30 seconds to 30 minutes under a tension of 0.5 kg/mm² or more before cold rolling in a tandem rolling mill.

### CITATION LIST

### Patent Literature

PTL 1: JPS 50-016610 A
PTL 2: JPH 08-253816 A
PTL 3: JPH 01-215925 A
PTL 4: JPH 09-157745 A
PTL 5: JPH 04-120216 A

### SUMMARY

### (Technical Problem)

In recent years, demand for grain-oriented electrical steel sheets with low iron loss has been increasing due to society's desire for energy conservation, and there is a need to develop technology for the stable mass production of grain-oriented electrical steel sheets with low iron loss.

Tandem mills have a higher throughput per hour than reverse mills such as the Zenzimmer mills, which fact is advantageous for the mass production of grain-oriented electrical steel sheets. The techniques described in PTLs 1 and 2, which apply inter-pass aging during rolling, will not demonstrate the intended effect when the distance between passes is short and the line speed is high, as in tandem rolling. In addition, the iron-loss-reducing effect provided by the method of heating and rolling at the entry side of the tandem mill, as described in PTL 3, is insufficient. The reasons for this are described below. Primary-recrystallized Goss-oriented grains are thought to nucleate from shear zones that have been introduced within the {111}<112> matrix microstructure, which is one of the rolling stable orientations. Since the {111}<112> matrix microstructure is developed by cold rolling at low temperatures, the method of heating and rolling at the entry side of the tandem mill could not sufficiently develop the {111}<112> matrix microstructure, resulting in an insufficient amount of primary-recrystallized Goss-oriented grains.

In addition, in the techniques described in PTLs 4 and 5, where carbide precipitation treatment is performed in the annealing process before final cold rolling, carbide coarsens due to the time elapsed between precipitation treatment and the subsequent final cold rolling, resulting in changes in the texture due to variations in time, which in turn causes large variations in iron loss in the product coils.

It would thus be helpful to provide a method of producing a grain-oriented electrical steel sheet that can solve the problems of the above conventional techniques and stably produce, in a tandem mill, a grain-oriented electrical steel sheet with low iron loss and little variation in iron loss, and a rolling mill used for the method.

### (Solution to Problem)

In order to solve the above problems, the present inventors have diligently studied a method of performing heat treatment before cold rolling in a series of processes for producing a grain-oriented electrical steel sheet. The following is a description of the experimental results that led to the present disclosure.

Steel slabs, each having a chemical composition consisting of, by mass%, C: 0.037 %, Si: 3.4 %, and Mn: 0.05 %, and, by mass ppm, S and Se: 31 ppm each, N: 50 ppm, and sol.Al: 85 ppm, with the balance being Fe and inevitable impurities, were heated to 1210 °C and hot rolled to obtain hot-rolled sheets of 2.0 mm in thickness. Each hot-rolled sheet was subjected to hot-rolled sheet annealing at 1000 °C for 60 seconds, then cooled at 25 °C/s in the temperature range from 800 °C to 350 °C, and then coiled. Each hot-rolled and annealed sheet thus obtained was rolled into a cold-rolled sheet with a thickness of 0.20 mm in a single tandem rolling operation using a tandem mill (roller diameter: 300 mm, number of stands: 5).

At this point, the hot-rolled and annealed sheets were heated to various temperatures between 50 °C and 250 °C by a heating device located between the payoff reel and the first-pass rolling stand of the rolling mill, as illustrated in Table 1. Two types of coils were made: one was such that the steel sheet was allowed to bite into the first-pass rolling stand at the same temperature after heating; and the other was such that the steel sheet was allowed to bite into the first-pass rolling stand after its temperature was lowered to 60 °C or 25 °C within 5 seconds after heating. Another type of coil was also made such that the steel sheet was left at room temperature and allowed to bite into the first-pass rolling stand without being heated.

Subsequently, each cold-rolled sheet was subjected to primary recrystallization annealing that also served as decarburization annealing with a soaking temperature of 840 °C and a soaking time of 100 seconds. Then, an annealing separator mainly composed of MgO was applied to the surface of the steel sheet. Then, each cold-rolled sheet was subjected to final annealing for secondary recrystallization. Then, a coating solution containing phosphate-chromate-colloidal silica in a mass ratio of 3:1:2 was applied to the surface of the steel sheet after subjection to the secondary recrystallization annealing. Then, each resulting steel sheet was subjected to flattening annealing at 800 °C for 30 seconds to obtain a product coil.

The iron loss of 10 coils fabricated under the same conditions was measured for each product coil, and the mean and standard deviation were determined. To measure the iron loss, a sample was cut from the longitudinal center of each coil so that the total weight was 500 g or more, and subjected to an Epstein test. The results of this iron loss measurement are listed in Table 1, along with the aforementioned heating temperature and first-pass biting temperature.

### [Table 1]

**Table 1**

| Condition No. | Heating temp. (°C) | First-pass biting temp. (°C) | Iron loss W_{17/50} (W/kg) | Standard deviation |
|---|---|---|---|---|
| 1 | Without heating (25 °C) | 25 | 1.10 | 0.13 |
| 2 | 50 | 50 | 1.08 | 0.11 |
| 3 | 50 | 60 | 1.10 | 0.10 |
| 4 | 60 | 60 | 1.10 | 0.12 |
| 5 | 70 | 70 | 0.98 | 0.09 |
| 6 | 70 | 60 | 0.90 | 0.04 |
| 7 | 80 | 80 | 1.05 | 0.03 |
| 8 | 80 | 60 | 0.88 | 0.02 |
| 9 | 90 | 90 | 1.13 | 0.04 |
| 10 | 90 | 60 | 0.87 | 0.04 |
| 11 | 100 | 100 | 1.09 | 0.05 |
| 12 | 100 | 60 | 0.85 | 0.03 |
| 13 | 125 | 125 | 1.07 | 0.02 |
| 14 | 125 | 60 | 0.86 | 0.02 |
| 15 | 150 | 150 | 1.20 | 0.04 |
| 16 | 150 | 60 | 0.88 | 0.03 |
| 17 | 175 | 175 | 1.25 | 0.05 |
| 18 | 175 | 60 | 0.79 | 0.04 |
| 19 | 200 | 200 | Unable to evaluate due to fracture during rolling. | |
| 20 | 200 | 60 | 0.80 | 0.04 |
| 21 | 225 | 225 | Unable to evaluate due to fracture during rolling. | |
| 22 | 225 | 25 | 1.05 | 0.05 |
| 23 | 250 | 250 | Unable to evaluate due to fracture during rolling. | |
| 24 | 250 | 25 | 1.21 | 0.04 |

It can be seen from Table 1 that when steel sheets are heated to heating temperatures in the range of 70 °C to 200 °C after being taken out from the payoff reel and before being bitten by the first pass during cold rolling (in the case of heating to 200 °C, at the first-pass biting temperature of 60 °C), the variation in iron loss is smaller. Furthermore, it can be seen that lower iron loss is obtained when the steel sheet temperature at the time of the steel sheet being bitten by the first pass is set to 60 °C after the steel sheet has been heated to a temperature range from 70 °C to 200 °C.

Although the mechanism by which iron loss and iron loss variation were reduced in the above experiments is not certain, the present inventors believe the following.
The mechanism of the reduction in iron loss variation is thought to be that by heating the steel sheet after being taken out from the payoff reel and before being bitten by the first pass during cold rolling, the time from heating the steel sheet until the steel sheet was bitten by the first pass was constant, and the aging of the fine carbides precipitated by the heating was suppressed over time. In addition, the mechanism of the reduction in iron loss when the steel sheet temperature was lowered after heating and before the steel sheet was bitten by the first pass is considered as follows. Primary-recrystallization Goss-oriented grains are thought to nucleate from shear zones that have been introduced within the {111}<112> matrix microstructure, which is one of the rolling stable orientations.

Accordingly, as in the above experiment, by heating the steel sheet to cause precipitation of fine carbides and by keeping the temperature low upon biting, a {111}<112> matrix microstructure is formed by the low-temperature rolling process, while the formation of shear zones is promoted locally by the fine carbides, with the result that the number of Goss-oriented grains was effectively increased.

In addition, the present inventors also studied the annealing process prior to cold rolling. The details of experiments are described below. Specifically, the hot-rolled sheets produced in the aforementioned experiments were subjected to hot-rolled sheet annealing at 1000 °C for 60 seconds, then cooled at various cooling rates in the temperature range from 800 °C to 350 °C as listed in Table 2, and then coiled. Each hot-rolled and annealed sheet thus obtained was rolled into a cold-rolled sheet with a thickness of 0.20 mm in a single tandem rolling operation using a tandem mill (roller diameter: 300 mm, number of stands: 5). At this point, each steel sheet was heated to 150 °C by a steel-sheet heating device located between the payoff reel and the first-pass rolling stand of the rolling mill. The steel sheet temperature was brought to room temperature (25 °C) within 5 seconds after heating before the steel sheet was bitten by the first-pass rolling stand.

Subsequently, each cold-rolled sheet was subjected to primary recrystallization annealing that also served as decarburization annealing with a soaking temperature of 840 °C and a soaking time of 100 seconds. Then, an annealing separator mainly composed of MgO was applied to the surface of the steel sheet. Then, each cold-rolled sheet was subjected to final annealing for secondary recrystallization. Then, a coating solution containing phosphate-chromate-colloidal silica in a mass ratio of 3:1:2 was applied to the surface of the steel sheet after subjection to the secondary recrystallization annealing. Then, each resulting steel sheet was subjected to flattening annealing at 800 °C for 30 seconds to obtain a product coil.

The iron loss of 10 coils fabricated under the same conditions was measured for each product coil, and the mean and standard deviation were determined. To measure the iron loss, a sample was cut from the longitudinal center of each coil so that the total weight was 500 g or more, and subjected to an Epstein test. The results of this iron loss measurement are listed in Table 2 along with the aforementioned cooling rates.

### [Table 2]

**Table 2**

| Condition No. | Average cooling rate in hot-rolled sheet annealing (°C/s) | Iron loss W_{17/50} (W/kg) | Standard deviation |
|---|---|---|---|
| 25 | 5 | 1.15 | 0.14 |
| 26 | 10 | 1.09 | 0.11 |
| 27 | 15 | 1.03 | 0.09 |
| 28 | 20 | 0.87 | 0.03 |
| 29 | 25 | 0.82 | 0.03 |
| 30 | 30 | 0.81 | 0.04 |

It can be seen from Table 2 that those with a cooling rate of 20 °C/s or higher during the hot-rolled sheet annealing exhibited a small variation in iron loss and low iron loss.

With regard to the mechanism by which the iron loss and the variation in iron loss were reduced in the above experiments, the present inventors believe the following. If the cooling rate during hot-rolled sheet annealing was high, the carbon in the steel is considered to have been in a solid solution state in a large amount, and heating in such a state of carbon in the steel is considered to have precipitated a large amount of fine carbides, thus improving the texture. On the other hand, if the cooling rate during hot-rolled sheet annealing is low, the carbon in the steel is considered to precipitate as carbides, and heating in that state would only coarsen the carbides, and the effect of improving the texture by heating before biting during cold rolling would not be sufficient. Based on these discoveries, further studies were conducted and the present disclosure was completed.

The primary features of the present disclosure are as follows.
[1] A method of producing a grain-oriented electrical steel sheet, comprising: subjecting a steel material to hot rolling to obtain a hot-rolled steel sheet; subjecting the hot-rolled steel sheet to either a single cycle of cold rolling, or multiple cycles of cold rolling with intermediate annealing in between, to obtain a cold-rolled sheet having a final sheet thickness; and then subjecting the cold-rolled sheet to decarburization annealing followed by secondary recrystallization annealing, wherein annealing that is performed just before final cold rolling is defined as annealing preceding final cold rolling, where the final cold rolling corresponds to, in a case of subjecting the hot-rolled steel sheet to the single cycle of cold rolling, the single cycle of cold rolling, and to, in a case of subjecting the hot-rolled steel sheet to the multiple cycles of cold rolling, the last one of the multiple cycles of cold rolling, and the annealing preceding final cold rolling is performed with an average cooling rate of 20 °C/s or higher in a temperature range from 800 °C to 350 °C, and the final cold rolling is performed using a tandem mill, where the steel sheet is heated to a temperature range from 70 °C to 200 °C and then cooled to 60 °C or lower within 10 seconds before being introduced into the first pass of the tandem mill.
[2] The method of producing a grain-oriented electrical steel sheet according to aspect [1], wherein the steel material comprises a chemical composition containing (consisting of), by mass%, C: 0.01 % to 0.10 %, Si: 2.0 % to 4.5 %, Mn: 0.01 % to 0.50 %, Al: 0.0100 % to 0.0400 %, S: 0.01 % to 0.05 %, Se: 0.01 % to 0.05 %, one or both of S and Se: 0.01 % to 0.05 % in total, and N: 0.0050 % to 0.0120 %, with the balance being Fe and inevitable impurities.
[3] The method of producing a grain-oriented electrical steel sheet according to aspect [1], wherein the steel material comprises a chemical composition containing (consisting of), by mass%, C: 0.01 % to 0.10 %, Si: 2.0 % to 4.5 %, Mn: 0.01 % to 0.50 %, Al: less than 0.0100 %, S: 0.0070 % or less, Se: 0.0070 % or less, and N: 0.0050 % or less, with the balance being Fe and inevitable impurities.
[4] The method of producing a grain-oriented electrical steel sheet according to aspect [2] or [3], wherein the steel material further contains, by mass%, at least one selected from the group consisting of Sb: 0.005 % to 0.500 %, Cu: 0.01 % to 1.50 %, P: 0.005 % to 0.500 %, Cr: 0.01 % to 1.50 %, Ni: 0.005 % to 1.500 %, Sn: 0.01 % to 0.50 %, Nb: 0.0005 % to 0.0100 %, Mo: 0.01 % to 0.50 %, B: 0.0010 % to 0.0070 %, and Bi: 0.0005 % to 0.0500 %.
[5] A rolling mill for producing a grain-oriented electrical steel sheet, comprising: a tandem mill located on a production line for a grain-oriented electrical steel sheet; and a heating device and a cooling device located on an entry side of the first stand of the tandem mill, in order from upstream to downstream of the production line.

### (Advantageous Effect)

According to the present disclosure, a grain-oriented electrical steel sheet with excellent magnetic properties and little variation in iron loss between coils can be stably produced using a tandem mill.

### DETAILED DESCRIPTION

The present disclosure will be described in detail below.

### <Steel Material>

In the production method disclosed herein, slabs, blooms, and billets can be used as the steel material. For example, steel slabs that are produced by known methods are usable. The steel material can be produced by, for example, steelmaking and continuous casting, ingot casting and blooming, or other methods. In steelmaking, molten steel obtained in a converter or electric furnace can be subjected to secondary refining such as vacuum degassing to obtain the desired chemical composition.

The steel material may have a composition for production of a grain-oriented electrical steel sheet, which can be the one publicly known as the composition for a grain-oriented electrical steel sheet. From the viewpoint of producing a grain-oriented electrical steel sheet with excellent magnetic properties, the chemical composition preferably contains C, Si, and Mn. Preferred contents of C, Si, and Mn are as follows. As used herein, the "%" representations below relating to the chemical composition are "mass%" unless otherwise noted.

### C: 0.01 % to 0.10 %

C is an element that contributes to improving the primary-recrystallized texture by precipitating fine carbides. If the content exceeds 0.10 %, it may be difficult to reduce the content to or below 0.0050 %, where magnetic aging does not occur, by decarburization annealing. On the other hand, if the content is less than 0.01 %, precipitation of fine carbides is insufficient, which may result in insufficient texture-improving effect. Therefore, the C content is preferably 0.01 % or more. The C content is preferably 0.10 % or less. It is more preferably 0.01 % or more. It is more preferably 0.08 % or less.

### Si: 2.0 % to 4.5 %

Si is an effective element in increasing the electrical resistance of steel and reducing iron loss. A Si content exceeding 4.5 % may cause a significant decrease in workability, making production by rolling difficult. On the other hand, if the content is less than 2.0 %, it may be difficult to obtain sufficient iron loss reduction. Therefore, the Si content is preferably 2.0 % or more. The Si content is preferably 4.5 % or less. It is more preferably 2.5 % or more. It is more preferably 4.5 % or less.

### Mn: 0.01 % to 0.50 %

Mn is a necessary element to improve hot workability. If the Mn content exceeds 0.50 %, the primary-recrystallized texture may deteriorate, making it difficult to obtain secondary recrystallized grains that are highly aligned with the Goss orientation. On the other hand, if the content is less than 0.01 %, it may be difficult to obtain sufficient hot-rolling workability. Therefore, the Mn content is preferably 0.01 % or more. The Mn content is preferably 0.50 % or less. It is more preferably 0.03 % or more. It is more preferably 0.50 % or less.

In addition to the above C, Si, and Mn, the chemical composition of the steel material may further contain Al: 0.0100 % to 0.0400 % and N: 0.0050 % to 0.0120 % as inhibitor components in the secondary recrystallization. In other words, if the Al and N contents are less than the lower limits, it may be difficult to obtain the predetermined inhibitor effect. On the other hand, if the upper limits are exceeded, the dispersion of precipitates becomes non-uniform, and it may be difficult to obtain the predetermined inhibitor effect.

In addition to Al and N, the chemical composition may further contain one or both of S and Se in a total amount of 0.01 % to 0.05 % as an inhibitor component. These elements can be added to form sulfides (such as MnS and Cu₂S) and selenides (such as MnSe and Cu₂Se). Sulfides and selenides may be precipitated in combination. If the S and Se contents are less than the lower limits, it may be difficult to obtain a sufficient effect as an inhibitor. On the other hand, if the upper limits are exceeded, the dispersion of precipitates becomes non-uniform, and it may be difficult to obtain a sufficient inhibitor effect.

As the chemical composition, the Al content can be suppressed to less than 0.0100 % to conform to an inhibitorless system. In this case, the N content may be 0.0050 % or less, the S content may be 0.0070 % or less, and the Se content may be 0.0070 % or less.

To further improve magnetic properties, in addition to the above components, the chemical composition may further contain at least one selected from the group consisting of Sb: 0.005 % to 0.500 %, Cu: 0.01 % to 1.50 %, P: 0.005 % to 0.500 %, Cr: 0.01 % to 1.50 %, Ni: 0.005 % to 1.500 %, Sn: 0.01 % to 0.50 %, Nb: 0.0005 % to 0.0100 %, Mo: 0.01 % to 0.50 %, B: 0.0010 % to 0.0070 %, and Bi: 0.0005 % to 0.0500 %. Sb, Cu, P, Cr, Ni, Sn, Nb, Mo, B, and Bi are elements useful for improving magnetic properties, and it is preferable to adjust their contents within the above ranges when added because they provide sufficient magnetic property improving effects without inhibiting the growth of secondary recrystallized grains.
The balance of the chemical composition of the steel material, other than the above components, is Fe and inevitable impurities.

### <Production Process>

In the production process disclosed herein, a steel slab, for example, is hot rolled to obtain a hot-rolled sheet. The steel slab can be heated before being subjected to hot rolling. In this case, the heating temperature is preferably about 1050 °C or higher from the viewpoint of ensuring hot rolling manufacturability. The upper limit of the heating temperature is not particularly limited, yet is preferably kept at or below 1450 °C because temperatures above 1450 °C are close to the melting point of steel, where it is difficult to maintain the shape of the slab.

Other hot rolling conditions are not particularly limited and known conditions may be applied.

The resulting hot-rolled sheet is subjected to hot-rolled sheet annealing. In the present disclosure, the cooling conditions in annealing preceding final cold rolling should be controlled as described below.

As used herein, the term "final cold rolling" refers to cold rolling that is performed in the last cycle of one or more cycles of cold rolling. For example, in a case where a single cycle of cold rolling is performed, the single cycle of cold rolling corresponds to the final cold rolling. In a case where two cycles of cold rolling are performed, the second cycle of cold rolling corresponds to the final cold rolling. Similarly, in a case where three or more cycles of cold rolling are performed, the last cycle of cold rolling corresponds to the final cold rolling.

As used herein, the term "annealing preceding final cold rolling" refers to annealing that is performed just before the "final cold rolling" as defined above. For example, in a case of a single cold rolling method where cold rolling is performed only once, the hot-rolled sheet annealing that is performed before the single cycle of cold rolling corresponds to the annealing preceding final cold rolling. In a case of a double cold rolling method where cold rolling is performed twice, the intermediate annealing that is performed between the first and second cycles of cold rolling corresponds to the annealing preceding final cold rolling. Similarly, in a case where cold rolling is performed three or more times, the intermediate annealing that is performed between the next to the last cycle of cold rolling and the last cycle of cold rolling corresponds to the annealing preceding final cold rolling.

In a case where hot-rolled sheet annealing is followed by a single cold rolling method, in which cold rolling is performed only once, the hot-rolled sheet annealing corresponds to the annealing preceding final cold rolling. In this case, cooling in the hot-rolled sheet annealing should be performed under the conditions described below. On the other hand, in a case where cold rolling is performed twice or more with intermediate annealing in between, the last cycle of cold rolling corresponds to the final cold rolling, and the intermediate annealing that is performed before the final cold rolling corresponds to the annealing preceding final cold rolling. Therefore, in this case, cooling in that intermediate annealing should be performed under the specific conditions, yet the conditions of hot-rolled sheet annealing are not particularly limited and known conditions may be applied.

When the cold rolling is performed twice or more, the hot-rolled sheet may be subjected to hot-rolled sheet annealing if necessary. After subjection to hot-rolled sheet annealing as needed, the hot-rolled sheet may be descaled by pickling or other means prior to cold rolling.

In the annealing preceding final cold rolling, conditions other than the average cooling rate in the temperature range from 800 °C to 350 °C are not particularly limited, and known conditions may be applied. For example, conditions such as heating to an annealing temperature of 970 °C to 1150 °C and holding at the annealing temperature for 10 seconds to 180 seconds before cooling are suitable for the present disclosure.

The average cooling rate in the temperature range from 800 °C to 350 °C during the cooling process in the annealing preceding final cold rolling is set to 20 °C/s or higher. By increasing the cooling rate in this temperature range, a large amount of solute carbon can be present in the steel, making it possible to promote the precipitation of fine carbides caused by heating before biting in the final cold rolling. The average cooling rate is preferably 35 °C/s or higher. The upper limit of the average cooling rate is not particularly limited, yet from the viewpoint of preventing cracking, it is preferably 300°C/s or lower.

In the cold rolling process, a cold-rolled sheet having a final sheet thickness may be made by a single cycle of cold rolling, or multiple cycles of cold rolling with intermediate annealing in between. The total rolling reduction of the cold rolling is not particularly limited, and may be 70 % or more and 95 % or less. The rolling reduction of the final cold rolling is not particularly limited, and may be 60 % or more and 95 % or less. The final sheet thickness is not particularly limited, and may be 0.1 mm or more and 1.0 mm or less, for example.

In this case, it is important that the final cold rolling be performed in a tandem mill, and that when the steel sheet is taken out from the payoff reel and led to the first pass of the final cold rolling, the steel sheet be heated to 70 °C or higher and 200 °C or lower and cooled to 60 °C or lower within 10 seconds before being bitten by the first pass.

The heating temperature of the steel sheet in the final cold rolling is set to 70 °C or higher and 200 °C or lower. That is, when the heating temperature is lower than 70 °C, fine carbides are not sufficiently precipitated, while when the heating temperature is higher than 200 °C, the diffusion rate of carbon becomes too high and coarse carbides are precipitated, resulting in the loss of the texture improving effect by strain aging and the deterioration of magnetic properties. The heating temperature is preferably 100 °C or higher. The heating temperature is preferably 170 °C or lower.

Just before the final cold rolling, the steel sheet is heated and then cooled so that the temperature of the steel sheet to be bitten by the first pass is 60 °C or lower. If the temperature is not at or below 60 °C, a {111}<112> matrix microstructure is not sufficiently formed, and the texture improving effect by heating is lost. Therefore, the temperature of the steel sheet at the time of being bitten by the first pass is set at or below 60 °C. Although the lower limit is not particularly limited, it is preferable to keep the temperature of the steel sheet above 0 °C at the time of being bitten by the first pass, because at or below 0 °C, the material becomes brittle, which adversely affects manufacturability.

The time between heating the steel sheet and cooling it to 60 °C or lower before the final cold rolling is within 10 seconds or less. The starting point of the time within 10 seconds can be the point in time at which the steel sheet leaves the exit side of the heating device. If the time exceeds 10 seconds, the precipitated carbides coarsen, and the texture improving effect is lost. The lower limit of the time to cooling is not particularly limited, yet if the time to cooling is too short, it may be difficult for fine carbides to precipitate sufficiently. Therefore, the time to cooling is preferably 2 seconds or more.

The method of heating prior to the final cold rolling is not particularly limited, and may be a method using, for example, air bath, oil bath, sand bath, or induction heating. However, since the heating takes place at the entry side of the tandem mill, a method that allows heating in a short time is desirable. The heating temperature is the temperature of the steel sheet at the exit side of the heating device.

The method of cooling after the heating prior to the final cold rolling is not particularly limited, including, for example, coolant spraying, cooling rollers, and oil bath. However, since the cooling takes place at the entry side of the tandem mill, a method that allows cooling in a short time is preferable.

In order to perform the above cold rolling, the tandem mill used in the present disclosure should be equipped with a heating device at the entry side of the first stand and a cooling device at the exit side of the heating device. As for the heating device, its heating mode is not particularly restrictive, yet is preferably an air bath, oil bath, sand bath, or induction heating as described above. Similarly, the cooling device is not particularly limited in its cooling mode, yet any of the above-described methods such as coolant spraying, cooling rollers, or oil bath, is preferred.

Although heat treatment such as aging treatment or warm rolling may be performed during the cold rolling, the method described in PTL 4, in which final rolling is divided into the first half and the second half and rolling at lower temperatures in the first half and at higher temperatures in the second half, is preferred. This is because primary-recrystallized Goss-oriented grains are thought to nucleate from shear zones that have been introduced within the {111}<112> matrix microstructure, which is one of the rolling stable orientations. As the {111}<112> matrix microstructure is developed by cold rolling at low temperatures, rolling at low temperatures in the first half of the process can create a large amount of {111}<112> matrix microstructure, and the subsequent rolling at high temperatures can efficiently create Goss-oriented recrystallization nuclei.

According to the method of producing a grain-oriented electrical steel sheet disclosed herein, the cold-rolled sheet finished to a final thickness as described above can be subjected to decarburization annealing, followed by secondary recrystallization annealing, to obtain a grain-oriented electrical steel sheet (product sheet). After the secondary recrystallization annealing, an insulating coating may be applied.

The conditions for the decarburization annealing are not particularly limited. In general, decarburization annealing is often combined with primary recrystallization annealing, and may also be combined therewith in the production method disclosed herein. In this case, conditions are not particularly limited and known conditions may be applied. Exemplary conditions include annealing conditions such as 800 °C for 2 minutes in a hot hydrogen atmosphere.

After being subjected to decarburization annealing, the cold-rolled sheet is subjected to final annealing for secondary recrystallization. An annealing separator can be applied to the steel sheet surface prior to the final annealing. The annealing separator is not particularly limited, and any known annealing separator may be used. For example, annealing separators mainly composed of MgO, with TiO₂ and other components added as needed, or mainly composed of SiO₂ or Al₂O₃, are usable.

After the final annealing, it is preferable that an insulating coating be applied to the steel sheet surface and baked, and if necessary, flattening annealed be performed to shape the steel sheet. The type of insulating coating is not particularly limited. In the case of forming an insulating coating, which imparts tensile tension to the steel sheet surface, it is preferable to use a coating solution containing phosphate-colloidal silica, as described in JP S50-79442 A, JP S48-39338 A, JP S56-75579 A, etc., and bake it at about 800 °C.

### [Example 1]

Steel slabs, each having a chemical composition consisting of, by mass%, C: 0.037 %, Si: 3.4 %, and Mn: 0.05 %, and, by mass ppm, S and Se: 31 ppm each, N: 50 ppm, and sol.Al: 85 ppm, with the balance being Fe and inevitable impurities, were heated to 1210 °C and hot rolled to obtain hot-rolled sheets of 2.0 mm in thickness.

Each hot-rolled sheet was subjected to hot-rolled sheet annealing at 1000 °C for 60 seconds, then cooled at 25 °C/s in the temperature range from 800 °C to 350 °C, and then coiled. Each hot-rolled and annealed sheet thus obtained was rolled into a cold-rolled sheet with a thickness of 0.20 mm in a single tandem rolling operation using a tandem mill (roller diameter: 300 mm, number of stands: 5). At this point, each steel sheet was heated to 150 °C by a steel-sheet heating device located between the payoff reel and the first-pass rolling stand of the rolling mill. Each steel sheet was cooled to the temperature listed in Table 3 within 5 seconds from the time it left the exit side of the heating device, and then allowed to bite into the first-pass rolling stand. Note that Condition No. 39 in Table 3 is the condition in which the steel sheet was heated to 150 °C and then allowed to bite into the first-pass rolling stand without cooling.

Subsequently, each cold-rolled sheet was subjected to primary recrystallization annealing that also served as decarburization annealing with a soaking temperature of 840 °C and a soaking time of 100 seconds. Then, an annealing separator mainly composed of MgO was applied to the surface of the steel sheet. Then, each cold-rolled sheet was subjected to final annealing for secondary recrystallization. Then, a coating solution containing phosphate-chromate-colloidal silica in a mass ratio of 3:1:2 was applied to the surface of the steel sheet after subjection to the secondary recrystallization annealing. Then, each resulting steel sheet was subjected to flattening annealing at 800 °C for 30 seconds to obtain a product coil.

The iron loss of 10 coils fabricated under the same conditions was measured for each product coil, and the mean and standard deviation were determined. To measure the iron loss, a sample was cut from the longitudinal center of each coil so that the total weight was 500 g or more, and subjected to an Epstein test. The results of this iron loss measurement are listed in Table 3, along with the aforementioned heating temperature and first-pass biting temperature.

### [Table 3]

**Table 3**

| Condition No. | Heating temp. (°C) | First-pass biting temp. (°C) | Iron loss W_{17/50} (W/kg) | Standard deviation | Remarks |
|---|---|---|---|---|---|
| 31 | 150 | 25 | 0.82 | 0.03 | Example |
| 32 | 150 | 40 | 0.85 | 0.04 | Example |
| 33 | 150 | 50 | 0.85 | 0.01 | Example |
| 34 | 150 | 60 | 0.88 | 0.02 | Example |
| 35 | 150 | 70 | 0.98 | 0.05 | Comparative example |
| 36 | 150 | 80 | 0.97 | 0.04 | Comparative example |
| 37 | 150 | 90 | 0.98 | 0.03 | Comparative example |
| 38 | 150 | 100 | 1.02 | 0.03 | Comparative example |
| 39 | 150 | 150 | 1.20 | 0.04 | Comparative example |

It can be seen from Table 3 that those materials with the temperatures of the steel sheets set at or below 60 °C upon being bitten by the first pass after heating exhibited lower iron loss.

### [Example 2]

Steel slabs, each having a chemical composition consisting of, by mass%, C: 0.037 %, Si: 3.4 %, and Mn: 0.05 %, and, by mass ppm, S and Se: 31 ppm each, N: 50 ppm, and sol.Al: 85 ppm, with the balance being Fe and inevitable impurities, were heated to 1210 °C and hot rolled to obtain hot-rolled sheets of 2.0 mm in thickness.

Each hot-rolled sheet was subjected to hot-rolled sheet annealing at 1000 °C for 60 seconds, then cooled at 25 °C/s in the temperature range from 800 °C to 350 °C, and then coiled. Each hot-rolled and annealed sheet thus obtained was rolled into a cold-rolled sheet with a thickness of 0.20 mm in a single tandem rolling operation using a tandem mill (roller diameter: 300 mm, number of stands: 5). At this point, each steel sheet was heated to 150 °C by a steel-sheet heating device located between the payoff reel and the first-pass rolling stand of the rolling mill. After the heating, each steel sheet was cooled to 25 °C within the various times listed in Table 4 (times required for cooling from the point in time at which the steel sheets left the exit side of the the heating device), and allowed to bite into the first-pass rolling stand.

Subsequently, each cold-rolled sheet was subjected to primary recrystallization annealing that also served as decarburization annealing with a soaking temperature of 840 °C and a soaking time of 100 seconds. Then, an annealing separator mainly composed of MgO was applied to the surface of the steel sheet. Then, each cold-rolled sheet was subjected to final annealing for secondary recrystallization. Then, a coating solution containing phosphate-chromate-colloidal silica in a weight ratio of 3:1:2 was applied to the surface of the steel sheet after subjection to the secondary recrystallization annealing. Then, each resulting steel sheet was subjected to flattening annealing at 800 °C for 30 seconds to obtain a product coil.

The iron loss of 10 coils fabricated under the same conditions was measured for each product coil, and the mean and standard deviation were determined. To measure the iron loss, a sample was cut from the longitudinal center of each coil so that the total weight was 500 g or more, and subjected to an Epstein test. The results of this iron loss measurement are listed in Table 4 along with the aforementioned times required for cooling.

### [Table 4]

**Table 4**

| Condition No. | Time required for cooling after heating (sec) | Iron loss W_{17/50} (W/kg) | Standard deviation | Remarks |
|---|---|---|---|---|
| 40 | 2 | 0.86 | 0.03 | Example |
| 41 | 4 | 0.83 | 0.04 | Example |
| 42 | 6 | 0.82 | 0.01 | Example |
| 43 | 8 | 0.85 | 0.02 | Example |
| 44 | 10 | 0.86 | 0.09 | Example |
| 45 | 12 | 0.97 | 0.11 | Comparative example |
| 46 | 14 | 1.02 | 0.10 | Comparative example |

It can be seen from Table 4 that those materials cooled within 10 seconds after heating exhibited lower iron loss with less variation in iron loss.

### [Example 3]

Steel slabs, each having a chemical composition consisting of, by mass%, C: 0.06 %, Si: 3.4 %, and Mn: 0.06 %, by mass ppm, N: 90 ppm and sol.Al: 250 ppm, and by mass%, S and Se: 0.02 % each, with the balance being Fe and inevitable impurities, were heated to 1400 °C and hot rolled to obtain hot-rolled sheets of 2.0 mm in thickness.

Each hot-rolled sheet was subjected to hot-rolled sheet annealing at 1000 °C for 60 seconds, then cooled at 10 °C/s in the temperature range from 800 °C to 350 °C, and then coiled. Each hot-rolled and annealed sheet thus obtained was subjected to the first cycle of cold rolling in a tandem mill (roller diameter: 300 mm, number of stands: 5), followed by intermediate annealing at 1100 °C for 80 seconds in an atmosphere with 75 vol% N₂ + 25 vol% H₂ and a dew point of 46 °C. During the cooling process in the temperature range from 800 °C to 350 °C, each hot-rolled and annealed sheet was cooled at various cooling rates as listed in Table 5. Then, the final cycle of cold rolling (final cold rolling) was performed in a tandem mill (roller diameter: 300 mm, number of stands: 5) to obtain a cold-rolled sheet of 0.20 mm in thickness. During the final cold rolling, each steel sheet was heated as described in Table 5 by a steel-sheet heating device located between the payoff reel and the first-pass rolling stand of the rolling mill. After the heating, each steel sheet was cooled to the temperatures listed in Table 5 within the times listed therein from the point in time at which it left the exit side of the heating device, and allowed to bite into the first-pass rolling stand.

Subsequently, each cold-rolled sheet was subjected to primary recrystallization annealing that also served as decarburization annealing with a soaking temperature of 840 °C and a soaking time of 100 seconds. Then, an annealing separator mainly composed of MgO was applied to the surface of the steel sheet. Then, each cold-rolled sheet was subjected to final annealing for secondary recrystallization. Then, a coating solution containing phosphate-chromate-colloidal silica in a weight ratio of 3:1:2 was applied to the surface of the steel sheet after subjection to the secondary recrystallization annealing. Then, each resulting steel sheet was subjected to flattening annealing at 800 °C for 30 seconds to obtain a product coil.

The iron loss of 10 coils fabricated under the same conditions was measured for each product coil, and the mean and standard deviation were determined. To measure the iron loss, a sample was cut from the longitudinal center of each coil so that the total weight was 500 g or more, and subjected to an Epstein test. The results of this iron loss measurement are listed in Table 5 along with the aforementioned conditions.

### [Table 5]

**Table 5**

| Condition No. | Average cooling rate in intermediate annealing (°C/s) | Heating temp. (°C) | Time required for cooling after heating (sec) | First-pass biting temp. (°C) | Iron loss W_{17/50} (W/kg) | Standard deviation | Remarks |
|---|---|---|---|---|---|---|---|
| 47 | 5 | 150 | 4 | 25 | 1.05 | 0.12 | Comparative Example |
| 48 | 10 | 150 | 4 | 25 | 1.02 | 0.10 | Comparative example |
| 49 | 15 | 150 | 4 | 25 | 0.99 | 0.09 | Comparative example |
| 50 | 20 | 150 | 4 | 25 | 0.87 | 0.05 | Example |
| 51 | 25 | 150 | 4 | 25 | 0.85 | 0.04 | Example |
| 52 | 30 | 150 | 4 | 25 | 0.85 | 0.04 | Example |
| 53 | 25 | without heating | 4 | 25 | 0.99 | 0.10 | Comparative example |
| 54 | 25 | 50 | 4 | 25 | 0.98 | 0.11 | Comparative example |
| 55 | 25 | 60 | 4 | 25 | 0.96 | 0.09 | Comparative example |
| 56 | 25 | 70 | 4 | 25 | 0.88 | 0.02 | Example |
| 57 | 25 | 80 | 4 | 25 | 0.89 | 0.03 | Example |
| 58 | 25 | 90 | 4 | 25 | 0.87 | 0.06 | Example |
| 59 | 25 | 100 | 4 | 25 | 0.86 | 0.05 | Example |
| 60 | 25 | 125 | 4 | 25 | 0.85 | 0.03 | Example |
| 61 | 25 | 175 | 4 | 25 | 0.87 | 0.04 | Example |
| 62 | 25 | 200 | 4 | 25 | 0.88 | 0.04 | Example |
| 63 | 25 | 225 | 4 | 25 | 0.98 | 0.05 | Comparative example |
| 64 | 25 | 250 | 4 | 25 | 0.99 | 0.04 | Comparative example |
| 65 | 25 | 150 | 2 | 25 | 0.89 | 0.03 | Example |
| 66 | 25 | 150 | 6 | 25 | 0.87 | 0.04 | Example |
| 67 | 25 | 150 | 8 | 25 | 0.85 | 0.02 | Example |
| 68 | 25 | 150 | 10 | 25 | 0.88 | 0.04 | Example |
| 69 | 25 | 150 | 12 | 25 | 0.94 | 0.10 | Comparative example |
| 70 | 25 | 150 | 14 | 25 | 0.98 | 0.11 | Comparative example |
| 71 | 25 | 150 | 4 | 40 | 0.85 | 0.05 | Example |
| 72 | 25 | 150 | 4 | 50 | 0.86 | 0.04 | Example |
| 73 | 25 | 150 | 4 | 60 | 0.88 | 0.03 | Example |
| 74 | 25 | 150 | 4 | 70 | 0.95 | 0.05 | Comparative example |
| 75 | 25 | 150 | 4 | 80 | 0.96 | 0.04 | Comparative example |
| 76 | 25 | 150 | 4 | 90 | 0.96 | 0.04 | Comparative example |
| 77 | 25 | 150 | 4 | 100 | 0.99 | 0.03 | Comparative example |
| 78 | 25 | 150 | - | 150 | 1.10 | 0.04 | Comparative example |

It can be seen from Table 5 that even in the case where steel slabs with high inhibitor content were subjected to intermediate annealing performed in between cold rolling cycles, the steel slabs exhibited low iron loss and less variation in iron loss when were rolled under the specific conditions in the final cold rolling.

### [Example 4]

Steel samples, each having a chemical composition consisting of, by mass%, C: 0.036 %, Si: 3.4 %, and Mn: 0.06 %, and, by mass ppm, N: 50 ppm, sol.Al: 72 ppm, S and Se: 31 ppm each, and Sb, Cu, P, Cr, Ni, Sn, Nb, Mo, B, and Bi as other additive components in the amounts as listed in Table 6, were prepared by smelting and made into steel slabs, which in turn were heated to 1210 °C and hot rolled to obtain hot-rolled sheets of 2.0 mm in thickness.

Each hot-rolled sheet was subjected to hot-rolled sheet annealing at 1000 °C for 60 seconds, then cooled at 25 °C/s in the temperature range from 800 °C to 350 °C, and then coiled. Each hot-rolled and annealed sheet thus obtained was rolled into a cold-rolled sheet with a thickness of 0.20 mm in a single tandem rolling operation using a tandem mill (roller diameter: 300 mm, number of stands: 5). During the final cold rolling, each steel sheet was heated to 150 °C by a steel-sheet heating device located between the payoff reel and the first-pass rolling stand of the rolling mill. After the heating, each steel sheet was cooled to 25 °C within 5 seconds from the point in time at which it left the exit side of the heating device, and then allowed to bite into the first-pass rolling stand.

Subsequently, each cold-rolled sheet was subjected to primary recrystallization annealing that also served as decarburization annealing with a soaking temperature of 840 °C and a soaking time of 100 seconds. Then, an annealing separator mainly composed of MgO was applied to the surface of the steel sheet. Then, each cold-rolled sheet was subjected to final annealing for secondary recrystallization. Then, a coating solution containing phosphate-chromate-colloidal silica in a mass ratio of 3:1:2 was applied to the surface of the steel sheet after subjection to the secondary recrystallization annealing. Then, each resulting steel sheet was subjected to flattening annealing at 800 °C for 30 seconds to obtain a product coil. The iron loss of 10 coils fabricated under the same conditions was measured for each product coil, and the mean and standard deviation were determined. To measure the iron loss, a sample was cut from the longitudinal center of each coil so that the total weight was 500 g or more, and subjected to an Epstein test. The results of this iron loss measurement are listed in Table 6 along with the composition of the aforementioned additive components.

### [Table 6]

**Table 6**

| Steel sample ID | Other additive components (mass %) | | | | | | | | | | Iron loss W_{17/50} (W/kg) | Standard deviation |
|---|---|---|---|---|---|---|---|---|---|---|---|---|
| | Sb | Cu | P | Cr | Ni | Sn | Nb | Mo | B | Bi | | |
| A1 | - | - | - | - | - | - | - | - | - | - | 0.82 | 0.03 |
| A2 | 0.01 | 0.05 | 0.05 | - | - | - | - | - | - | - | 0.76 | 0.03 |
| A3 | 0.01 | - | - | - | 0.050 | - | 0.005 | - | - | - | 0.74 | 0.04 |
| A4 | 0.14 | - | - | - | - | - | - | 0.22 | 0.004 | - | 0.77 | 0.03 |
| A5 | 0.35 | 0.22 | 0.12 | - | - | 0.12 | - | - | - | - | 0.77 | 0.04 |
| A6 | - | 0.05 | 0.05 | 0.02 | - | - | - | - | - | - | 0.77 | 0.02 |
| A7 | - | 0.78 | - | - | - | 0.43 | - | 0.37 | - | - | 0.78 | 0.04 |
| A8 | - | 1.31 | - | 0.27 | 0.420 | - | - | - | - | - | 0.76 | 0.02 |
| A9 | - | - | 0.30 | - | - | - | 0.002 | - | 0.005 | 0.0020 | 0.77 | 0.04 |
| A10 | - | - | - | 1.01 | - | - | - | - | - | - | 0.78 | 0.04 |
| A11 | 0.42 | - | - | 1.31 | 0.890 | - | - | - | - | - | 0.78 | 0.03 |
| A12 | - | - | - | - | 1.350 | - | - | - | - | - | 0.76 | 0.02 |
| A13 | - | - | 0.42 | - | 0.007 | - | - | 0.11 | - | 0.0010 | 0.75 | 0.01 |
| A14 | - | - | - | - | - | - | - | - | - | 0.0007 | 0.79 | 0.04 |
| A15 | - | - | - | - | 0.050 | 0.02 | 0.005 | - | - | - | 0.74 | 0.03 |
| A16 | - | - | - | - | - | - | - | 0.02 | 0.002 | 0.0100 | 0.76 | 0.03 |
| A17 | - | 0.05 | 0.05 | - | 0.050 | - | - | - | - | - | 0.77 | 0.02 |
| A18 | - | - | - | - | - | 0.02 | 0.005 | - | - | 0.0100 | 0.75 | 0.03 |
| A19 | - | - | - | 0.02 | - | - | - | 0.02 | 0.002 | - | 0.75 | 0.03 |
| A20 | - | 0.05 | - | - | - | 0.02 | - | - | - | 0.0100 | 0.77 | 0.04 |
| A21 | - | - | - | 0.02 | - | 0.02 | - | 0.02 | - | - | 0.78 | 0.01 |
| A22 | - | - | 0.05 | - | - | - | - | - | - | - | 0.78 | 0.02 |
| A23 | - | - | - | - | 0.050 | - | - | - | - | - | 0.79 | 0.04 |
| A24 | - | - | - | - | - | - | - | - | 0.002 | - | 0.77 | 0.03 |

It can be seen from Table 6 that those steel sheets to which one or more of Sb, Cu, P, Cr, Ni, Sn, Nb, Mo, B, and Bi were added exhibited reduced iron loss as low as 0.80 W/kg or less, and less variation in properties in the longitudinal direction of the coils.

## Claims

1. A method of producing a grain-oriented electrical steel sheet, comprising:
subjecting a steel material to hot rolling to obtain a hot-rolled steel sheet;
subjecting the hot-rolled steel sheet to either a single cycle of cold rolling, or multiple cycles of cold rolling with intermediate annealing in between, to obtain a cold-rolled sheet having a final sheet thickness; and
then subjecting the cold-rolled sheet to decarburization annealing followed by secondary recrystallization annealing, wherein
annealing that is performed just before final cold rolling is defined as annealing preceding final cold rolling, where the final cold rolling corresponds to, in a case of subjecting the hot-rolled steel sheet to the single cycle of cold rolling, the single cycle of cold rolling, and to, in a case of subjecting the hot-rolled steel sheet to the multiple cycles of cold rolling, the last one of the multiple cycles of cold rolling, and
the annealing preceding final cold rolling is performed with an average cooling rate of 20 °C/s or higher in a temperature range from 800 °C to 350 °C, and the final cold rolling is performed using a tandem mill, where the steel sheet is heated to a temperature range from 70 °C to 200 °C and then cooled to 60 °C or lower within 10 seconds before being introduced into the first pass of the tandem mill.

2. The method of producing a grain-oriented electrical steel sheet according to claim 1, wherein the steel material comprises a chemical composition containing, by mass%,
C: 0.01 % to 0.10 %,
Si: 2.0 % to 4.5 %,
Mn: 0.01 % to 0.50 %,
Al: 0.0100 % to 0.0400 %,
one or both of S and Se: 0.01 % to 0.05 % in total, and
N: 0.0050 % to 0.0120 %,
with the balance being Fe and inevitable impurities.

3. The method of producing a grain-oriented electrical steel sheet according to claim 1, wherein the steel material comprises a chemical composition containing, by mass%,
C: 0.01 % to 0.10 %,
Si: 2.0 % to 4.5 %,
Mn: 0.01 % to 0.50 %,
Al: less than 0.0100 %,
S: 0.0070 % or less,
Se: 0.0070 % or less, and
N: 0.0050 % or less,
with the balance being Fe and inevitable impurities.

4. The method of producing a grain-oriented electrical steel sheet according to claim 2 or 3, wherein the steel material further contains, by mass%, at least one selected from the group consisting of
Sb: 0.005 % to 0.500 %,
Cu: 0.01 % to 1.50 %,
P: 0.005 % to 0.500 %,
Cr: 0.01 % to 1.50 %,
Ni: 0.005 % to 1.500 %,
Sn: 0.01 % to 0.50 %,
Nb: 0.0005 % to 0.0100 %,
Mo: 0.01 % to 0.50 %,
B: 0.0010 % to 0.0070 %, and
Bi: 0.0005 % to 0.0500 %.

5. A rolling mill for producing a grain-oriented electrical steel sheet, comprising:
a tandem mill located on a production line for a grain-oriented electrical steel sheet; and
a heating device and a cooling device located on an entry side of the first stand of the tandem mill, in order from upstream to downstream of the production line.
